Europäisches Patentamt

European Patent Office

Office européen des brevets

(11) Publication number: **0 485 599 A1**

# EUROPEAN PATENT APPLICATION
## published in accordance with Art. 158(3) EPC

(21) Application number: 90908660.5

(22) Date of filing: 30.05.90

(86) International application number:
PCT/JP90/00695

(87) International publication number:
WO 91/18760 (12.12.91 91/28)

(51) Int. Cl.⁵: **B60R 21/16**

(43) Date of publication of application:
20.05.92 Bulletin 92/21

(84) Designated Contracting States:
DE FR GB

(71) Applicant: **TAKATA KABUSHIKI KAISHA**
**4-30, Roppongi 1-chome**
**Minato-ku, Tokyo 106(JP)**

(72) Inventor: **KOKAGUCHI, Akira, 949-2, Azumadai**
Hara-cho
**Hikone-shi Shiga 522(JP)**
Inventor: **FUJII, Masahiro, Takata Kabushiki**
**Kaisha Echigawa**
**Seizosho 658, Uneme, Echigawa-cho**
**Echi-gun Shiga 529-13(JP)**

(74) Representative: **Bubb, Antony John Allen et al**
**GEE & CO. Chancery House Chancery Lane**
**London WC2A 1OU(GB)**

(54) **AIR BAG IN AIR BAG UNIT.**

(57) An air bag unit provided with an air bag (1) which inflates and cushions a passenger at the time of collision of a car, wherein the air bag (1) is equipped with two base cloths (2, 3) at least one surface of each of which is coated with a rubber or a thermoplastic resin and which are cut in predetermined shapes, and these cloths (2, 3) are put one upon another so that their surfaces coated with the rubber or thermoplastic resin face inward. A reinforcing cloth (9) is sandwiched between the outer peripherical end portions of these cloths (2, 3) and the cloths (2, 3) and the reinforcing cloth (9) are fused thermally to one another. Accordingly, the bonded portion is not thick because there is no sewed up portion by sewing yarns unlike in the case of sewing. As a result, the package capacity of the air bag is small and hence, the air bag device is lightweight and compact. Since the bonded portion of the two base cloths (2, 3) is reinforced with the reinforcing cloth (9), sufficient strength can be secured and even when an inflating gas bursts into the bag, these cloths (2, 3) are not separated easily.

FIG. 2

## FIELD OF THE INVENTION

The present invention relates to an air bag unit for protecting an occupant in a vehicle by absorbing the shock occurred at vehicle collision, and in particular to an air bag in an air bag unit for receiving the occupant by inflating at the vehicle collision.

## TECHNICAL BACKGROUND

When vehicle such as automobile collides, so-called secondary collision often occurs when an occupant in the vehicle is pushed forward by inertia and strikes against car body. An air bag unit has been developed as a protective unit for protecting the occupant from such secondary collision.

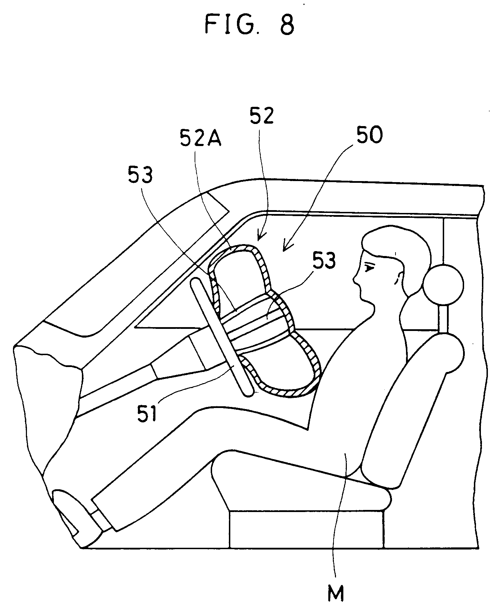

Fig. 8 shows an example of such conventional type air bag unit.

In Fig. 8, the air bag unit 50 is installed at the center of a steering handle 51, which is furnished face-to-face to an occupant M on the driver's seat in the vehicle.

In an emergency such as vehicle collision, gas is quickly introduced into an air-bag 52 from an inflator (not shown) installed at the center of the steering handle 51, and the air bag 52 is inflated as shown in Fig. 8. By the inflated air bag 52, the occupant M moving forward by inertia is received and the occupant M is prevented from being collided against car body such as the steering handle 51.

The air bag 52 used in this air bag unit 50 is generally formed by cutting two pieces of the woven cloth, having its inner side coated with gum, into approximately circular shape and by sewing up the outer peripheral edges to form a bag.

However, because the air bag 52 must be sewn up manually, this requires much labor and time. Moreover, because big force is applied on the sewn portion when the air bag 52 is inflated, the portion must be strengthened by sewing twice. Also, it is necessary to coat heat-resistant material on the sewn portion to protect the sewing threads from the heat of hot gas or to attach heat-resistant tape to prevent air leakage through the openings on the sewn portion or through the holes along the seam. This means the increase in the number of processes and much more work.

When the air bag is sewn twice, the bag becomes bulky when it is folded up. Particularly, it becomes more bulky because relatively thick threads must be used for the purpose of reinforcement. As the result, the package volume of the air bag is increased. However, when the air bag unit 50 is to be installed within the central portion of the steering handle 51, it is impossible to easily install the air bag unit with such large package volume because the central portion of the steering handle has very narrow space. If such bulky air bag unit is forcibly installed at the central portion of the steering handle 51, it causes inconveniences for driving, and the driving operation is hindered.

For this reason, it has been proposed to bond two pieces of base cloths by vulcanizing bonding. By this vulcanizing bonding, the air bag can be folded in relatively compact form compared with the method by sewing.

However, the vulcanizing bonding requires much time and work for vulcanizing after bonding, and this results in the problem of labor and time similar to that of the sewing. Moreover, it is impossible to check the vulcanizing condition, and problem arises with the reliability of the air bag.

The present invention is to solve the above problems, and its object is to offer an air bag in an air bag unit, which can minimize the package volume and which requires less time and labor for manufacturing.

## DISCLOSURE OF THE INVENTION

To solve the above problems, in the air bag according to the present invention, at least the inner sides of two base cloths constituting the air bag are coated with rubber or thermoplastic resin, and outer peripheral edges of the base cloths are thermally welded. Further, reinforcement cloth is disposed on this thermally welded portion, and the reinforcement cloth is thermally welded on two base cloths.

In an air bag of the air bag unit according to the present invention with the above arrangement, outer peripheral portions of two base cloths are bonded together by thermal welding. There is no sewn portion by threads as in the case of conventional sewing method, and the bonded portion is not thick. As the result, the package volume of the air bag is minimized, and the air bag is not very bulky even when it is folded up. Therefore, it is possible to design the air bag unit in lightweight and compact form, and the air bag unit can be easily installed at the point with limited space such as the central portion of the steering wheel. Moreover, this eliminates the troublesome sewing work as seen in the conventional method. Accordingly, the time and the processes to manufacture the air bag can be reduced, and this leads to the improvement of productivity and to the reduction of manufacturing cost for air bag.

Because the bonded portion of two base cloths is reinforced by the reinforcement cloth, sufficient strength can be assured. Therefore, two base cloths are not easily detached even when the inflating gas is rapidly introduced into them.

Further, because two base cloths and reinforcement cloth are thermally welded, these can be bonded together by simply melting the resin on the bonded portion by heat. Because the airtightness between two base cloths can be completely maintained by welding, there is no need to take special measures to prevent the gas leaking. This leads to easy bonding and good workability.

BRIEF DESCRIPTION OF THE DRAWINGS

Fig. 1 is a plan view of an embodiment of the air bag of the present invention;
Fig. 2 is a cross-sectional view along the line II - II in Fig. 1;
Fig. 3 is a drawing to explain the force applied on the base cloth when the air bag is inflated;
Fig. 5 is a plan view of a reinforcement cloth used in this air bay;

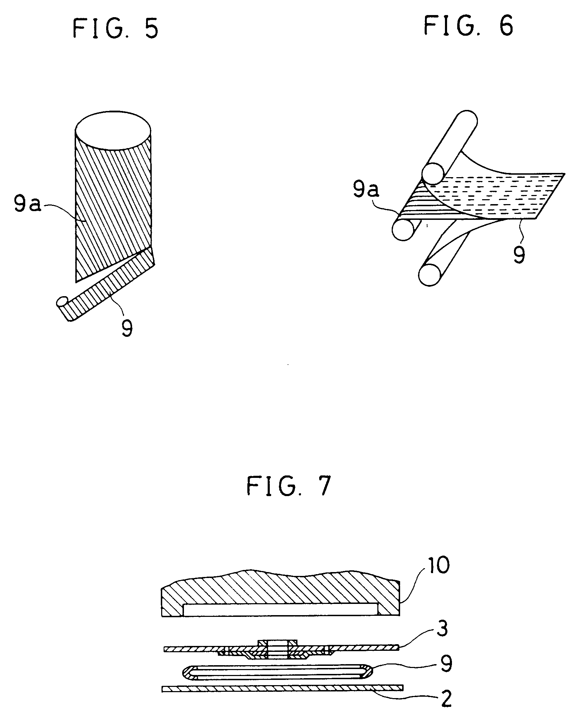

Fig. 5 is a drawing to explain the method to manufacture the reinforcement cloth;
Fig. 6 is a drawing to explain the other manufacturing method of the reinforcement cloth;
Fig. 7 is a drawing to explain the method to manufacture the air bag; and
Fig. 8 is a drawing to explain a conventional type air bag unit.

DETAILED DESCRIPTION OF THE PREFERRED EMBODIMENT

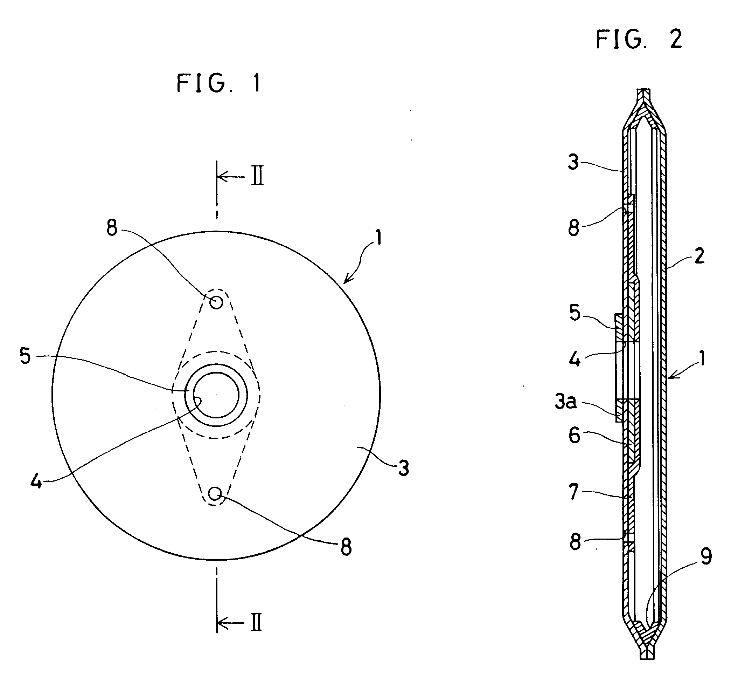

As shown in Figs. 1 and 2, the air bag 1 comprises a front side base cloth 2 and a rear side base cloth 3 formed in bag-like shape. These base cloths can be produced from resin such as polyester, nylon 6 or vinylon, etc. Particularly, it is preferable to form the base cloths from nylon 66 if strength and flexibility are taken into account. At least on inner sides of these base cloths 2 and 3, i.e. the surfaces opposed to each other, rubber or thermoplastic resin is coated or laminated. As the thermoplastic resin, nylon resin or polyester resin is used.

Both of the base cloths 2 and 3 are cut in the predetermined shape.

The rear side base cloth 3 is provided with a hole 4, into which the inflator of the air bag unit (not shown) is to be inserted, and the inner peripheral edge of the base cloth 3 forming the hole 4 is attached on the inflator. Specifically, the inner peripheral edge of the base cloth 3 also serves as a mount 3a for the inflator. In this case, to reinforce the mount 3a, a reinforcement cloth 5 is bonded on outer side of the base cloth 3 on the mount 3a, and a reinforcement cloth 6 is bonded on inner side of the base cloth 3 on the mount 3a. Further, a reinforcement cloth 7 is bonded on the base cloth 3 to cover the reinforcement cloth 6.

These reinforcement cloths 5, 6 and 7 are made of the same material as that of the base cloths 2 and 3, and rubber or thermoplastic resin is coated or laminated at least on the side facing to the base cloth 3 as in the case of base cloths 2 and 3. The reinforcement cloths 5, 6 and 7 are bonded with the base cloth 3 by thermal welding. The holes of the same size as the hole 4 on the base cloth 3 are formed on these reinforcement cloths 5, 6 and 7. Two vent holes 8 and 8 are penetrating the base cloth 3 and the reinforcement cloth 7. The inflating gas in the air bag 1 is slowly released through these vent holes 8 when the occupant is collided against the inflated air bag 1, and this alleviates the shock when the occupant is collided against the air bag 1.

The outer peripheral edges of both base cloths 2 and 3 are bonded together by thermal welding. On the bonded portion of the base cloths 2 and 3, a belt-like reinforcement cloth 9 is attached over total periphery and is bonded with the base cloths 2 and 3 by thermal welding. It is preferable to use the same material as the base cloths 2 and 3 for the reinforcement cloth 9 because of the affinity with base cloths 2 and 3. Also, the same rubber or thermoplastic resin as used on the base cloths 2 and 3 are coated on the reinforcement cloth 9. Further, on one surface of the reinforcement cloth 9, i.e. on the surface not facing toward the base cloths 2 and 3, a heat-resistant material such as heat-resistant film with the melting point higher than that of the coating material is attached. This heat-resistant material may not be used, depending upon the thermal welding method.

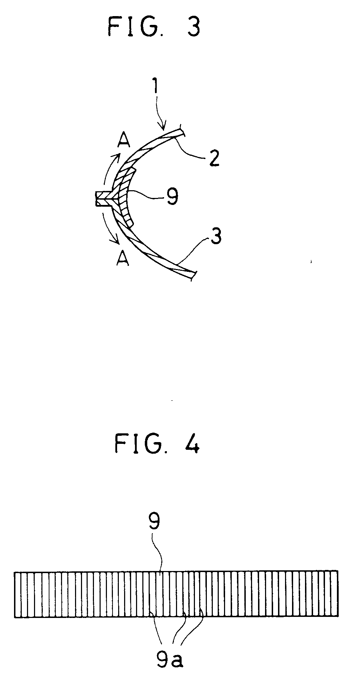

As shown in Fig. 3, the reinforcement cloth 9 must have such strength that it can perfectly resist against the force in the direction of the arrow A applied on the bonded portion when the air bag 1 is inflated. For this purpose, the strength of the reinforcement cloth 9 is increased by intermingling a great number of reinforcement threads 9a into this reinforcement cloth 9 as shown in Fig. 4 in the direction approximately perpendicular to the longitudinal direction of the reinforcement cloth 9.

To manufacture the reinforcement cloth 9, the reinforcement threads 9a are wound in form of a hose as shown in Fig. 5 and covering material is attached on inner and outer surfaces. Then, it is cut in the direction perpendicular to the reinforcement threads 9a and wound up.

According another method shown in Fig. 6, a number of reinforcement threads 9a are arranged in one direction, and these are laminated with the coating material. Then, it is cut into the predetermined width in the direction perpendicular to the reinforcement threads 9a.

As described above, the air bag 1 is formed in bag-like shape. In manufacturing the air bag 1 with such arrangement, two pieces of cloths, where rubber or thermoplastic resin has been coated or laminated in advance, are cut into the predetermined shape. Next, on inner and outer surfaces of the base cloth 3, which is to become the rear side cloth, reinforcement cloths 5, 6 and 7 are thermally welded at the predetermined positions. Then, a hole 4 to receive the inflator is provided, and vent holes 8 are furnished. The base cloths 2 and 3 are overlapped in such manner that the coated surfaces face toward inside, and the reinforcement cloth 9 is folded and placed in longitudinal direction at the predetermined position between these base cloths 2 and 3.

As shown in Fig. 7, a welding jig 10 having almost the same shape as outer peripheral edges of the base cloths 2 and 3 is attached on the bonded portion, and heat is applied by heat sealing, impulse sealing or high frequency sealing. By this heat, the coating material on the base cloths 2 and 3 and reinforcement cloth 9 are melted, and outer peripheral edges of the base cloths 2 and 3 and the reinforcement cloth 9 are thermally welded. In this case, the surfaces of the reinforcement cloth 9, which come together by folding, are not thermally welded because these surfaces are coated with heat-resistant material.

As the result, the air bag 1 in bag-like shape can be obtained. In the air bag 1 thus formed, the reinforcement cloth 9 is thermally welded on base cloths 2 and 3. When a force is applied in the direction of the arrow A in Fig. 3 as the air bag 1 is inflated, this force is received by the reinforcement cloth 9. Therefore, the strength of the bonded portions of the base cloths 2 and 3 is determined by the width of the reinforcement cloth 9, i.e. the bonding area of the base cloths 2 and 3 with the reinforcement cloth 9. This means that it is possible to increase the strength of the bonded portion by adjusting the width of the reinforcement cloth 9. The results of the bonding strength test are shown in Table 1.

As it is evident from Table 1, the strength of the bonded portion can be increased extensively by thermal welding method. By such thermal welding, it is possible to maintain the strength of the bonded portion at considerable level even when base cloths 2 and 3 are thinner in comparison with the case of conventional sewing method where the strength of the bonded portion is determined by the strength of the base cloth and the strength thus obtained is only 40 to 50% of the strength of the base cloth. Therefore, by making the base cloths 2 and 3 thinner, the air bag 1 can be lightweight and does not become bulky when it is folded.

Table 1

| Strength of the bonded portion of air bag according to each manufacturing method | | |
|---|---|---|
| No. | Specification | Strength of bonded portion (kg•f/5 cm) |
| 1 | Coating material: Thermoplastic elastomer (polyester)<br>Width of reinforcement cloth: 40 mm<br>Bonding method: Thermal welding | 242 |
| 2 | Coating material: Urethane rubber<br>Width of reinforcement cloth: 40 mm<br>Bonding method: Adhesive agent | 202.3 |
| 3 | Coating material: Chloroprene rubber<br>Reinforcement cloth: Not used<br>Bonding method: Sewing | 169.0 |

Because sewing work requiring troublesome processes can be eliminated by thermal welding, the air bag 1 can be manufactured extremely easily. Moreover, coating material can be easily melted by heat, and it is possible to mechanize the process. This makes it possible to continuously manufacture the air bag 1, to suit the automation and to improve the productivity. In addition, the air bag 1 can be produced in compact design because there is no sewn portion.

In the above embodiment, the reinforcement threads 9a of the reinforcement cloth 9 are placed in the direction perpendicular to the longitudinal direction of the reinforcement cloth 9, whereas the present invention is not limited to this, and the cloth woven from threads can be placed so that the threads are directed in any direction. Also, it is possible not to use such reinforcement threads 9a if sufficient strength can be maintained.

APPLICABILITY FOR THE INDUSTRY

The air bag in an air bag unit according to the present invention can be use on a vehicle and applied for the purpose of protecting the occupant by absorbing the shock, which occurs when the vehicle is collided.

**Claims**

1. An air bag in an air bag unit for receiving an occupant by inflating when the vehicle is collided, characterized in that at least one side of said air bag is coated with rubber or thermoplastic resin, two base cloths cut in the predetermined shape are furnished, these base cloths are overlapped with each other with the surfaces coated with said rubber or said thermoplastic resin facing inside, a reinforcement cloth is placed between outer peripheral edges of these base cloths, and these two base cloths and the reinforcement cloth are thermally welded together.

FIG. 2

FIG. 1

FIG. 3

FIG. 4

FIG. 5

FIG. 6

FIG. 7

FIG. 8

# INTERNATIONAL SEARCH REPORT

International Application No. PCT/JP90/00695

## I. CLASSIFICATION OF SUBJECT MATTER (if several classification symbols apply, indicate all)

According to International Patent Classification (IPC) or to both National Classification and IPC

Int. Cl⁵    B60R21/16

## II. FIELDS SEARCHED

### Minimum Documentation Searched

| Classification System | Classification Symbols |
|---|---|
| IPC | B60R21/16-21/32 |

### Documentation Searched other than Minimum Documentation to the Extent that such Documents are Included in the Fields Searched

| | |
|---|---|
| Jitsuyo Shinan Koho | 1964 – 1990 |
| Kokai Jitsuyo Shinan Koho | 1971 – 1990 |

## III. DOCUMENTS CONSIDERED TO BE RELEVANT

| Category* | Citation of Document, with indication, where appropriate, of the relevant passages | Relevant to Claim No. |
|---|---|---|
| A | JP, A, 2-114035 (Toray Industries, Inc., Du Pont-Toray Co., Ltd.), 26 April 1990 (26. 04. 90), Lines 8 to 12, upper left column, page 2, line 18, upper left column, page 2 to line 3, upper right column, page 3, lines 10 to 14, lower left column, page 2 (Family: none) | 1 |
| A | JP, A, 48-49139 (Asahi Chemical Industry Co., Ltd.), 11 July 1973 (11. 07. 73), Line 14, upper right column to line 6, lower left column, page 2 (Family: none) | 1 |
| A | JP, A, 1-41439 (Asahi Chemical Industry Co., Ltd.), 13 February 1989 (13. 02. 89), Lines 4 to 15, upper right column, page 2 (Family: none) | 1 |

* Special categories of cited documents: ¹⁰
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step
"Y" document of particular relevance; the claimed invention cannot be considered to involve an inventive step when the document is combined with one or more other such documents, such combination being obvious to a person skilled in the art
"&" document member of the same patent family

## IV. CERTIFICATION

| Date of the Actual Completion of the International Search | Date of Mailing of this International Search Report |
|---|---|
| August 20, 1990 (20. 08. 90) | September 3, 1990 (03. 09. 90) |

| International Searching Authority | Signature of Authorized Officer |
|---|---|
| Japanese Patent Office | |

Form PCT ISA 210 (second sheet) (January 1985)

FURTHER INFORMATION CONTINUED FROM THE SECOND SHEET

```
A     JP, U, 50-137735 (Asahi Chemical Industry          1
      Co., Ltd.),
      13 November 1975 (13. 11  75),
      (Family: none)
```

## V. OBSERVATIONS WHERE CERTAIN CLAIMS WERE FOUND UNSEARCHABLE [1]

This international search report has not been established in respect of certain claims under Article 17(2) (a) for the following reasons:

1. ☐ Claim numbers          . because they relate to subject matter not required to be searched by this Authority, namely:

2. ☐ Claim numbers          , because they relate to parts of the international application that do not comply with the prescribed requirements to such an extent that no meaningful international search can be carried out, specifically:

3. ☐ Claim numbers          , because they are dependent claims and are not drafted in accordance with the second and third sentences of PCT Rule 6.4(a)

## VI. OBSERVATIONS WHERE UNITY OF INVENTION IS LACKING [2]

This International Searching Authority found multiple inventions in this international application as follows:

1. ☐ As all required additional search fees were timely paid by the applicant, this international search report covers all searchable claims of the international application.

2. ☐ As only some of the required additional search fees were timely paid by the applicant, this international search report covers only those claims of the international application for which fees were paid, specifically claims:

3. ☐ No required additional search fees were timely paid by the applicant. Consequently, this international search report is restricted to the invention first mentioned in the claims; it is covered by claim numbers:

4. ☐ As all searchable claims could be searched without effort justifying an additional fee, the International Searching Authority did not invite payment of any additional fee.

Remark on Protest

☐ The additional search fees were accompanied by applicant's protest

☐ No protest accompanied the payment of additional search fees.

Form PCT/ISA/210 (supplemental sheet (2)) (January 1985)

International Application No PCT/JP90/00695

FURTHER INFORMATION CONTINUED FROM THE SECOND SHEET

A    JP, A, 1-122754 (Sekisui Chemical Co., Ltd.),    1
     16 May 1989 (16. 05. 89),
     Lines 11 to 14, lower right column, page 2
     (Family: none)

A    JP, A, 1-122751 (Asahi Chemical Industry    1
     Co., Ltd.),
     16 May 1989 (16. 05. 89),
     Lines 3 to 6, lower left column, page 2
     (Family: none)

A    JP, U, 63-34751 (Takata K.K.),    1
     5 March 1988 (05. 03. 88),
     (Family: none)

V.☐ OBSERVATIONS WHERE CERTAIN CLAIMS WERE FOUND UNSEARCHABLE ¹

This international search report has not been established in respect of certain claims under Article 17(2) (a) for the following reasons:

1.☐ Claim numbers        , because they relate to subject matter not required to be searched by this Authority, namely:

2.☐ Claim numbers        , because they relate to parts of the international application that do not comply with the prescribed requirements to such an extent that no meaningful international search can be carried out, specifically:

3.☐ Claim numbers        because they are dependent claims and are not drafted in accordance with the second and third sentences of PCT Rule 6.4(a).

VI.☐ OBSERVATIONS WHERE UNITY OF INVENTION IS LACKING ²

This International Searching Authority found multiple inventions in this international application as follows:

1.☐ As all required additional search fees were timely paid by the applicant, this international search report covers all searchable claims of the international application.

2.☐ As only some of the required additional search fees were timely paid by the applicant, this international search report covers only those claims of the international application for which fees were paid, specifically claims:

3.☐ No required additional search fees were timely paid by the applicant. Consequently, this international search report is restricted to the invention first mentioned in the claims; it is covered by claim numbers:

4.☐ As all searchable claims could be searched without effort justifying an additional fee, the International Searching Authority did not invite payment of any additional fee.

Remark on Protest

☐ The additional search fees were accompanied by applicant's protest.
☐ No protest accompanied the payment of additional search fees.

Form PCT/ISA/210 (supplemental sheet (2)) (January 1985)